# EUROPÄISCHE PATENTSCHRIFT

(11) **EP 0 569 061 B1**
(45) Veröffentlichungstag und Bekanntmachung des Hinweises auf die Patenterteilung: **02.06.1999**
(21) Anmeldenummer: 93200682.8
(22) Anmeldetag: 10.03.1993
(51) Int. Cl.: H04Q 7/20, H04Q 7/26, H04Q 7/38, H04M 1/66, H04M 1/57, H04M 3/38

(54) **Schnurloses Telefon**
Cordless telephone
Téléphone sans fil

(30) Priorität: 11.03.1992 DE 4207776
(43) Veröffentlichungstag der Anmeldung: 10.11.1993
(73) Patentinhaber: Philips Patentverwaltung GmbH, 22335 Hamburg (DE); Koninklijke Philips Electronics N.V., 5621 BA Eindhoven (NL)
(72) Erfinder: Sondermann, Manfred, W-2000 Hamburg 1 (DE); Kosmann, Erwin, W-2000 Hamburg 1 (DE); Ranner, Georg, W-2000 Hamburg 1 (DE)
(74) Vertreter: Volmer, Georg, Dipl.-Ing.

(56) Entgegenhaltungen:
- EP-A- 0 478 231
- WO-A-85/02738
- WO-A-89/11765
- BE-A- 892 397
- US-A- 4 680 785
- Bedienungsanleitung des Panasonic Schnurlos-Telefons, Modell: KX-T3900 EASA-PHONE, Seiten 1-31, Stand 07/88

## Beschreibung

Die Erfindung betrifft ein Schnurloses Telefon mit einer Basisstation und mindestens einem dieser Basisstation mittels einer zwischen Basissstation und einem Handteil vereinbarten ersten Kennung zugeordneten Handteils, wobei zur Verhinderung eines Gesprächsaufbau zwischen Basisstation und dieser Basisstation nicht zugeordneten Handteilen ein Austausch dieser ersten Kennung vorgesehen ist. Die Erfindung betrifft des weiteren auch die Basisstation eines solchen Schnurlosen Telefons als auch ein Handteil für ein solches Schnurloses Telefon.

Bei schnurlosen Telefonen sind die Frequenzen der Funkkanäle zwischen Basisstation und Handteilen der schnurlosen Telefone genormt. Auf die genormten Funkfrequenzen können die schnurlosen Telefone wahlfrei zugreifen. Ein Zugriff nicht einander zugeordneter Geräte auf denselben Funkkanal muß dabei jedoch sicher vermieden werden.

Hierzu ist beispielsweise aus DE OS 39 18 697.0 ein Austausch von Kennungen zwischen Basisstation und Handteil bekannt, um durch einen solchen Austausch einen Verbindungsaufbau zwischen nicht einander zugeordneten Geräten zu verhindern. Das eine Kennung empfangende Gerät überprüft die empfangene Kennung mit einer gespeicherten Kennung und bricht bei Nichtübereinstimmung der beiden Kennungen die Verbindung ab. Aus dieser Schrift ist es weiterhin bekannt, jedem aus Basisstation und Handteil bestehenden Gerätepaar bereits bei der Produktion eine nur einmalig vergebene Kennung jeweils in einem Festwertspeicher der Basisstation und des Handteils abzulegen.

Weiterhin sind beispielsweise aus EP 03 03 998 A2 auch schnurlose Telefone bekannt, bei denen eine solche Kennung in der Basisstation als Zufallszahl erzeugt wird und einem Handteil beim Aufladen des Handteils in der Basisstation übermittelt wird.

Aus der Bedienungsanleitung des Schnurlosen Telefons KX-T3900 EASA-PHONE^{R} der Firma Panasonic, Stand 07/88 ist es bekannt, Basisstation und Handteil eines Schnurlosen Telefons durch Eingabe eines dreistelligen Sicherheitscode, der sowohl an der Basisstation über eine Tastatur der Basisstation als auch über die Tastatur des Handteils jeweils eingegeben werden muß, einander paarweise zuzuordnen. In dieser Gebrauchsanweisung wird empfohlen, wenn Benutzer anderer Schnurloser Telefone Gespräche mithören können, bzw. man selbst Gespräche anderer Benutzer mithören kann, den Sicherheitscode an Basisstation und Handteil zu wechseln. Einen Hinweise auf die Zuordenbarkeit mehrer Handteile enthält diese Bedienungsanleitung nicht.

Schließlich ist aus WO-A-89 / 11 765 ein Verfahren zum Verbindungsaufbau zwischen einem Fest- und mehreren Mobilteilen eines Schnurlostelefonsystems bekannt, bei dem einem Festteil mehrere Mobilteile zugeordnet sein können. Zur Überwachung der Zuordnung tauschen Festteil und Mobilteile Kennungsmeldungen aus, wobei neben einer individuellen Kennung zur Unterscheidung der einzelnen Mobilteile, für die Feststtation und allen dieser Feststation zugeordneten Mobilteile eine gemeinsame Gruppenkennung vorgesehen ist. Diese Schrift enthält jedoch weder einen Hinweis ob die Gruppenkennung, und somit die Zuordnung einzelner Handteile änderbar ist, noch wie eine solche Änderung erfolgen könnte.

Aufgabe der vorliegenden Erfindung ist es, bei einem schnurlosen Telefon der eingangs genannten Art eine größere Flexibilität zu erzielen, indem ein Mobilteil beliebigen Basisstationen zuordenbar ist, wobei weder die Qualität der Sprechverbindungen leiden sollte, noch Manipulationsmöglichkeiten eröffnet werden sollten.

Diese Aufgabe wird dadurch gelöst, daß in der Basisstation eine zweite Kennung gespeichert ist und daß zur Zuordnung eines Handteils zu dieser Basisstation die Eingabe einer zweiten Kennung über die Tastatur des zuzuordnenden Handteil vorgesehen ist, daß das Handteil dazu vorgesehen ist diese zweite Kennung auszusenden, daß die Basisstation dazu vorgesehen ist, empfangene Kennungen mit der gespeicherten zweiten Kennung zu vergleichen und bei als korrekt anerkannter zweiter Kennung ihre erste Kennung auszusenden und daß das Handteil dazu vorgesehen, ist in Folge einer ausgesandten zweiten Kennung emfangene Kennungen als erste Kennungen für den Aufbau folgender Gespräche zu speichern.

Bei allen bekannten schnurlosen Telefonen, die eine Sicherheitsüberprüfung zur Vermeidung von Zugriffen nicht zugeordneter Basisstationen bzw. Handteile aufweisen, kann ein Mobilteil nur dann eine Funkverbindung zu einer bestimmten Basisstation aufbauen, wenn sie der Basisstation die in irgendeiner Weise gemeinsam vereinbarte Kennung übermittelt. Bei der vorgeschlagenen Lösung ist ein Verbindungsaufbau zum Datenaustausch auch mit der in der Basisstation gespeicherten zweiten Kennung möglich. Jeder Benutzer, dem diese zweite Kennung bekannt ist, kann diese über ein mit der Basisstation kompatiblen Handteil eingeben. Auf diese Weise kann sich jeder Benutzer eines solchen Handteils an jeder vom Benutzer frei wählbaren Basisstation anmelden, sofern ihm die zweite Kennung der Basisstation bekannt ist.

Die Basisstation, die eine Übereinstimmung der über den Funkkanal übermittelten Kennung und der eigenen in der Basisstation gespeicherten zweiten Kennung erkennt, schickt daraufhin dem anmeldenden Handteil die erste in der Basisstation gespeicherte Kennung. Das Handteil speichert die empfangene erste Kennung der Basisstation in einem überschreibbaren Speicher. Damit ist die Anmeldeprozedur beendet. Für einen sonstigen Datenaustausch zwischen Basisstation und angemeldeten Handteil, beispielsweise einen Gesprächsaufbau zwischen Basisstation und angemeldetem Handteil wird von nun an nur noch die erste Kennung verwendet. Dies bietet den Vorteil, daß eine große Sicherheit gegenüber Manipulationen gegeben ist, da die erste Kennung vor jedermann verborgen bleibt.

In einer weiteren Ausgestaltung der Erfindung ist eine änderbare Kennung vorgesehen. Diese änderbare Kennung kann beispielsweise eine persönliche Identifikationsnummer sein, die der Benutzer eines schnurlosen Telefons beliebig ändern kann. Diese Kennung kann somit vor jedermann geheimgehalten werden.

In einer weiteren Ausgestaltung der Erfindung ist ein Verbindungsaufbau ohne die erste Kennung nur dann vorgesehen, wenn die zweite Kennung und die änderbare Kennung zusammen übermittelt werden. Diese Ausgestaltung bietet den Vorteil, daß das Anmelden einer Mobilstation durch einen unberechtigten Benutzer mit größtmöglicher Sicherheit vermieden wird.

In der Produktion kann die zweite Kennung für jede Basisstation nur einmal vergeben werden, so daß ein zufälliges Anmelden an einer benachbarten Basisstation vermieden wird, während bei einem reinen Austausch von persönlichen Identifikationsnummern Benutzer von benachbarten Basisstationen zufälligerweise die gleiche persönliche Identifikationsnummer wählen könnten. Auf der anderen Seite wird durch die zusätzliche persönliche Identifikationsnummer sichergestellt, daß ein Benutzer, der zufällig die zweite Kennung kennt, nicht ein kompatibles Handteil an der Basisstation eines anderen Benutzers anmelden kann.

Eine weitere Erhöhung der Sicherheit ergibt sich dadurch, daß nach einer bestimmten Anzahl von Anmeldeversuchen eines Handteils mit einer änderbaren Kennung, die nicht der in der Basisstation gespeicherten änderbaren Kennung entspricht, das Handteil in einen Zustand geschaltet werden kann, in dem keine Eingaben mehr möglich sind. Bei einer Ausgestaltung, bei der das Handteil nur noch von einem Servicetechniker zurückgesetzt werden kann, wird der Anreiz zu einer Manipulation wegen des damit verbundenen Aufwands zum Rücksetzen eines gesperrten Handteils erheblich vermindert.

In einer weiteren Ausführungsform kann mit dem Anmelden des Handteils auch eine durch den Benutzer wählbare Gerätenummer an die Basisstation übermittelt werden. Diese Ausführungsform eignet sich im besonderen Maße für aus schnurlosen Telefonen gebildete Nebenstellenanlagen, bei denen mehrere schnurlose Telefone von einer einzigen Basisstation aus bedient werden. Anhand der Gerätenumer, die auch in dem Handteil gespeichert wird, kann das entsprechende Handteil selektiv angesprochen werden. Bei aus schnurlosen Telefonen gebildeten Vermittlungsanlagen ist auf diese Weise eine einfache Erweiterung der von der Vermittlungsanlage bedienbaren Teilnehmer durch die Teilnehmer selbst gegeben.

Die Möglichkeit des An- und Abmeldens von Handteilen bietet den Vorteil, daß jedes Handteil einer beliebigen Basisstation zugeordnet werden kann. So ist es beispielsweise möglich, ein Handteil sowohl zuhause als auch beispielsweise im Büro zu verwenden. Auf diese Weise können die Anschaffungskosten auf die tatsächlich benötigte Anzahl von Handteilen reduziert werden.

Durch das An- und Abmelden der Handteile über die Handteile selbst, ist es auch möglich eine An- bzw. Abmeldung auch dann durchzuführen, wenn ein direkter Zugang zu der Basisstation nicht besteht. Dies könnte beispielsweise dann von Bedeutung sein, wenn sich die Basisstation in einem verschlossenen Raum befindet.

Die Erfindung wird nun anhand eines Ausführungsbeispiels näher beschrieben und erläutert.

Zum Anmelden eines neuen Handteils muß zunächst am Handteil eine Tastenkombination gedrückt werden, die die Eingabe einer Anmeldeprozedur ermöglicht. Im Ausführungsbeispiel sind dies die Tasten "SET" und die Ziffer 9. Anschließend ist eine sechsstellige Systemkennung SSSSSS einzugeben und dann eine vierstellige persönliche Identifikationsnummer XXXX. Die Systemkennung ist jedem Erwerber einer Basisstation beispielsweise durch eine beigepackte Information bekannt. Ist wie in diesem Ausführungsbeispiel zum An- und Abmelden auch noch zusätzlich eine persönliche Identifikationsnummer vorgesehen, so kann diese Systemkennung ohne Sicherheitsverlust sogar sichtbar an der Basisstation angebracht sein. Ohne Kenntnis der persönlichen Identifikationsnummer ist eine widerrechtliche Manipulation trotzdem weitestgehend ausgeschlossen.

Durch Eingabe einer Quittungstaste, im Ausführungsbeispiel die "∗"-Taste, wird die Eingabeprozedur bestätigt. Im Ausführungsbeispiel kann im Anschluß daran noch eine einstellige Nummer N, die dem Handteil zugewiesen werden kann, eingeben werden.

Das Handteil sendet nun auf einem freien Funkkanal die eingegebene Systemkennung SSSSSS, die persönliche Identifikationsnummer XXXX, und die Gerätenummer N des Handteils. Befindet sich die Basisstation mit der einmalig vergebenen Systemkennung SSSSSS im Funkbereich des Handteils, so erkennt es anhand der zweiten Kennung eine an die Basisstation gerichteten Anmeldewunsch. Durch Auswertung der persönlichen Identifikationsnummer XXXX erkennt es, ob der Anmeldewunsch von einem dazu authorisierten Benutzer ausgeht. Ist dies der Fall, so sendet die Basisstation auf dem aufgebauten Funkkanal die in der ersten Basisstation abgelegte Kennung an die Mobilstation. Die Mobilstation, die die erste Kennung auf dem gewählten Funkkanal erhält, speichert diese Kennung in einem elektrisch löschbaren Speicher. So bleibt die Kennung auch bei einem Stromausfall des Handteils erhalten.

Gleichzeitig gibt sie einen Quittungston, im Ausführungsbeispiel eine Dauerton der Länge 3 Sekunden ab, um den Benutzer von dem erfolgreichen Anmeldeversuch zu informieren. Erhält das Handteil innerhalb einer vorgegebenen Zeit keine Kennung übermittelt, entweder weil sich das Handteil außerhalb der Funkreichweite der Basisstation befindet, oder auch weil eine nicht übereinstimmende persönliche Identifikationsnummer zur Anmeldung gewählt wurde, so erzeugt das Handteil ein Warnsignal. Im Ausfuhrungsbeispiel sind dies drei aufeinanderfolgende pulsartige Tonsignale.

Die Basisstation überwacht die Anzahl der Versuche eines Handteils, sich mit einer falschen persönlichen Identifikationsnummer anzumelden. Werden mehr als acht erfolglose Anmeldungsversuche hintereinander durchgeführt, so sendet die Basisstation an das Handteil einen Sperrbefehl. Aufgrund dieses Sperrbefehls werden in dem Handteil alle Eingabemöglichkeiten gesperrt. Eine Rücknahme dieser Sperrfunktion ist nur durch einen Servicetechniker möglich.

Wird hingegen bei der Anmeldeprozedur festgestellt, daß unter der übermittelten Gerätenummer bereits ein anderes Handteil an der Basisstation angemeldet ist, so schickt die Basisstation ebenfalls nicht ihre erste Kennung zurück. Auf diese Weise wird der Benutzer wieder durch einen Warnton auf diese Situation aufmerksam gemacht. Solche fehlgeschlagenen Versuche zählen jedoch nicht für ein Sperren des Handteils, da ja jeweils die richtige persönliche Identifikationsnummer verwendet wurde.

Ein Abmelden eines Handteils ist auf gleiche Weise möglich. Die persönliche Identifikationsnummer bietet hierbei Schutz vor dem Abmelden eines Handteils durch eine nicht berechtigte Person. Im Ausführungsbeispiel wird hierzu die schon beschriebene Prozedur durchgeführt, wobei bei der -Eingabe anstelle der Sterntaste "*" die Rautetaste "#" auf dem numerischen Tastenfeld des Handteils gedrückt werden muß. In diesem Fall wird die Rückmeldung der Basisstation lediglich für einen Quittungston, der die erfolgreiche Abmeldung signalisiert, erforderlich.

Im Ausführungsbeispiel ist ferner die Änderung der persönlichen Identifikationsnummer über ein Handteil vorgesehen. Im Ausführungsbeispiel sind die persönlichen Identifikationsnummern von direkt aus der Produktion stammenden Basisstationen auf einem Vorgabewert, nämlich auf 0000 gesetzt. Besonders in diesem Fall ist eine Änderung der persönlichen Identifikationsnummer dringend angeraten. Durch Drücken der Tastenkombination "SET" und der Ziffer 9 wird die Programmierung am Handteil eingeleitet. Daraufhin müssen die sechsstellige Systemkennung SSSSSS, die bisherige persönliche Identifikationsnummer XXXX und eine neue vierstellige persönliche Identifikationsnummer YYYY eingegeben werden. Durch Drücken der Taste "SET" wird die Änderung der persönlichen Identifikationsnummer abgeschlossen und der Änderungswunsch auf einem Funkkanal ausgestrahlt. Die Basisstation, die anhand der Systemkennung und der richtigen bisherigen persönlichen Identifikationsnummer die Berechtigung zum Andern der persönlichen Identifikationsnummer erkennt, schreibt nun in ihren Speicher die in der Meldung enthaltene neue persönliche Identifikationsnummer YYYY und schickt an den Benutzer über den Funkkanal eine Quittungsmeldung zurück.

Die bei einer Anmeldung ausgewählte Gerätenummer wird in dem Handteil gespeichert. Das Handteil kann nun, beispielsweise in einer aus schnurlosen Telefonen gebildeten Nebenstellenanlage selektiv unter dieser Nummer angesprochen werden. Hierzu enthalten die von der Basistation für einen Gesprächsaufbau verwendeten Meldungen einen Meldungsteil, in welchen eine Gerätenummer übertragen werden kann. Durch Vergleich der in den empfangenen Meldungen enthaltenen Gerätenummer und der eigenen gespeicherten Gerätenummer kann das Handteil einen an ihn gerichteten Selektivruf erkennen.

## Patentansprüche

1. Schnurloses Telefon mit einer Basisstation und mindestens einem dieser Basisstation mittels einer zwischen Basisstation und einem Handteil vereinbarten ersten Kennung zugeordneten Handteils, wobei zur Überprüfung der Zugriffsberechtigung eines Handteils auf die Basisstation zwischen Basisstation und Handteil ein Austausch dieser ersten Kennung vorgesehen ist,
dadurch gekennzeichnet,
daß in der Basisstation eine zweite Kennung gespeichert ist und daß zur Zuordnung eines Handteils zu dieser Basisstation die Eingabe einer zweiten Kennung über die Tastatur des zuzuordnenden Handteil vorgesehen ist, daß das Handteil dazu vorgesehen ist diese zweite Kennung auszusenden, daß die Basisstation dazu vorgesehen ist, eine empfangene Kennung mit der gespeicherten zweiten Kennung zu vergleichen und bei als korrekt anerkannter zweiter Kennung ihre erste Kennung auszusenden und daß das Handteil dazu vorgesehen ist, eine in Folge einer ausgesandten zweiten Kennung empfangen Kennung als erste Kennung für die Überprüfung der Zugriffsberechtigung zu speichern.

2. Basisstation eines schnurlosen Telefons, bei der der Basisstation mittels einer zwischen der Basisstation und einem Handteil vereinbarten ersten Kennung mindestens ein Handteil zuordenbar ist, wobei zur Überprüfung der Zugriffsberechtigung des mindestens einen Handteils auf die Basisstation zwischen Basisstation und Handteil ein Austausch dieser ersten Kennung vorgesehen ist,
dadurch gekennzeichnet,
daß in der Basisstation zur Zuordnung eines Handteils zu dieser Basisstation eine zweite Kennung gespeichert ist, die Basisstation dazu vorgesehen ist empfangene Kennungen mit der gespeicherten zweiten Kennung zu vergleichen und bei als korrekt anerkannter zweiter Kennung ihre erste Kennung auszusenden.

3. Handteil für ein schnurloses Telefon, welches mittels einer zwischen einer Basisstation und diesem Handteil vereinbarten ersten Kennung einer Basisstation zuordenbar ist, wobei zur Überprüfung der Zugriffsberechtigung diesen Handteils auf die Basisstation zwischen Basisstation und Handteil ein Austausch dieser ersten Kennung vorgesehen ist,
dadurch gekennzeichnet,
daß zur Zuordnung eines Handteils zu einer Basisstation die Eingabe einer zweiten Kennung über die Tastatur des zuzuordnenden Handteil vorgesehen ist, daß das Handteil dazu vorgesehen ist, diese zweite Kennung auszusenden und eine in Folge der ausgesandten zweiten Kennung empfangene Kennung als erste Kennung für die Überprüfung der Zugriffsberechtigung zu speichern.

4. Vorrichtung nach einem der vorangehenden Ansprüche,
dadurch gekennzeichnet,
daß die zweite Kennung zusammengesetzt ist aus einem herstellerseitig unveränderbar vorgegebenen ersten Kennungsteil (Systemkennung) und einem benutzerseitig frei wählbaren zweiten Kennungsteil (Persönliche Identifikationsnummer).

## Claims

1. A cordless telephone with a base station and at least one handset assigned to this base station by means of a first identification code agreed between base station and handset, for which an exchange of this first identification code is effected to inhibit a call set up between base station and handsets not assigned to this base station, characterized in that a second identification code is stored in the base station and in that for assigning a handset to this base station the handset to be assigned is to enter a second identification code by the keyboard, in that the handset transmits this second identification code, in that the base station compares a received identification code with the stored second identification code and transmits its first identification code when the second identification code is recognized as correct and in that the handset stores an identification code received as a transmitted second identification code as a first identification code for checking the access authorization.

2. A base station of a cordless telephone for which at least one handset can be assigned to the base station by means of a first identification code agreed between base station and handset, for which an exchange of this first identification code is effected to check the access authorization of the at least one handset to the base station, characterized in that a second identification code is stored in the base station for assigning a handset to this base station, in that the base station compares received identification codes with the stored second identification code and transmits its first identification code when the second identification code is recognized as correct.

3. A handset for a cordless telephone which can be assigned to a base station by means of a first identification code agreed between a base station and this handset, for which an exchange of this first identification code is effected between base station and handset to check the access authorization of this handset to the base station, characterized in that for assigning a handset to a base station a second identification code is entered by the keyboard of the handset to be assigned, in that the handset transmits this second identification code and stores an identification code received as a transmitted second identification code as a first identification code for checking the access authorization.

4. A device as claimed in one of the preceding claims, characterized in that the second identification code is composed of an unchangeable predefined code portion (system code) given by the manufacturer and a second freely selectable code portion at the user end (personal identification number).

## Revendications

1. Téléphone sans fil avec une station de base et au moins un combiné affecté à cette station de base à l'aide d'une première identification convenue entre la station de base et un combiné, un échange de cette première identification étant prévu pour le contrôle de l'autorisation d'accès d'un combiné à la station de base entre la station de base et le combiné, caractérisé en ce que, dans la station de base, une deuxième identification est enregistrée et que, pour l'affectation d'un combiné à cette station de base, l'introduction d'une deuxième identification est prévue par l'intermédiaire du clavier du combiné à affecter de telle sorte que le combiné soit conçu pour transmettre cette deuxième identification, que la station de base soit conçue pour comparer une identification reçue avec la deuxième identification enregistrée et, en cas de deuxième identification correctement reconnue, lui transmettre la première identification et que le combiné soit conçu pour enregistrer une identification reçue à la suite d'une deuxième identification transmise comme une première identification pour le contrôle de l'autorisation d'accès.

2. Station de base d'un téléphone sans fil dans lequel au moins un combiné peut être affecté à la station de base à l'aide d'une première identification convenue entre la station de base et un combiné, un échange de cette première identification étant prévu pour le contrôle de l'autorisation d'accès d'au moins un combiné à la station de base entre la station de base et le combiné, caractérisée en ce que, dans la station de base, une deuxième identification est enregistrée dans la station de base en vue de l'affectation d'un combiné à cette station de base, la station de base est prévue pour comparer les identifications reçues avec la deuxième identification enregistrée et, en cas de deuxième identification correctement reconnue, transmettre sa première identification.

3. Combiné pour un téléphone sans fil qui peut être affecté à une station de base à l'aide d'une première identification convenue entre une station de base et ce combiné, un échange de cette première identification étant prévu en vue du contrôle de l'autorisation d'accès de ce combiné sur la station de base entre la station de base et le combiné, caractérisé en ce qu'en vue de l'affectation d'un combiné à une station de base, l'introduction d'une deuxième identification est prévue sur le clavier du combiné à affecter, que le combiné est prévu pour transmettre cette deuxième identification et pour enregistrer l'identification reçue à la suite de la deuxième identification transmise comme une première identification pour le contrôle et l'autorisation d'accès.

4. Dispositif selon l'une des revendications précédentes, caractérisé en ce que la deuxième identification est composée d'une première partie d'identification (identification du système) invariable et préalablement déterminée par le fabricant et une deuxième partie d'identification (numéro d'identification personnel) à choisir librement par l'utilisateur.
